# EUROPÄISCHE PATENTANMELDUNG

(11) **EP 2 936 983 A1**
(43) Veröffentlichungstag der Anmeldung: **28.10.2015**
(21) Anmeldenummer: 14166022.5
(22) Anmeldetag: 25.04.2014
(51) Int. Cl.: A01N 43/82, A01N 43/40, A01N 43/08, A01P 13/00

(54) **Wirkstoffe zur Ertragssteigerung in Baumwollkulturen**

(71) Anmelder: Bayer CropScience AG, 40789 Monheim (DE)
(72) Erfinder: ELSHERIF, Mohamed, Dr., 51373 Leverkusen (DE)
(74) Vertreter: BIP Patents

(57) **Zusammenfassung**

Verwendung einer Mischung, enthaltend
(A) Flufenacet und
(B) Diflufenican,
zur Verbesserung des Pflanzenwachstums und/oder Erhöhung des Pflanzenertrags im Baumwollanbau.

## Beschreibung

Die Erfindung betrifft das Gebiet der Pflanzenwachstumsregulatoren, insbesondere die Verwendung von Flufenacet und Diflufenican enthaltende Mischungen zur direkten Verbesserung des Pflanzenwachstums und/oder Erhöhung des Pflanzenertrags in Baumwollkulturen.

Die Kultivierung von Baumwollpflanzen ist nach deren Keimung oftmals sehr problematisch, insbesondere in afrikanischen Ländern, da diese auf die unterschiedlichsten Umwelteinflüsse sehr empfindlich reagieren können. So werden zum Beispiel die Bildung von vegetativen und generativen Trieben bzw. Zweigen sowie das Längenwachstum der Baumwollpflanzen oft stark gehemmt, was zu einem signifikanten Ertragsverlust und somit zu einem erheblichen wirtschaftlichen Schaden führt.

Bekannt im Hinblick auf Ertragssteigerung bei Baumwolle ist, dass bestimmte chemische Substanzen das Pflanzenwachstums verbessern können. So wird beispielsweise durch Behandlung des Baumwollsaatguts vor der Aussaat mit Natrium-γ-phenylbutyrat, der Proteingehalt der Blätter in frühen Wachstumsstadien erhöht (A.U. Kariev, Inst. Khim. Rast. Veshchestv., Tashkent, USSR Uzbekskii Biologicheskii Zhurnal (1981), 20-23), Pflanzenwachstum und Ölgehalt des Erntegutes erhöht (A. Kariev, Inst. Khim. Rastit. Veshchestv, Tashkent, USSR, Khlopkovodstvo (1981), 37-38) und die Translokation von Mono- und Disacchariden positiv beeinflusst (A.U. Kariev, Inst. Khim. Rast. Veshchestv, Tashkent, USSR Doklady Akademii Nauk USSR (1978), 56-57) sowie Blütenbildung und Abreifung der Baumwollpflanzen gesteigert (A.A. Umarov, et al., Inst. Khim. Rast. Veshchestv, Tashkent, USSR, Doklady Vsesoyuznoi (1979), 15-16), was jeweils zu Ertragssteigerungen führte.

Eine Behandlung des Baumwollsaatguts ("Beizung") vor der Aussaat erfordert jedoch spezielle Apparaturen, die nicht in allen Fällen zur Verfügung stehen, und spezielle Maßnahmen, die beispielsweise nicht gewünscht sind, da hierdurch zu zusätzlichen Kosten verursacht werden, die den Gewinn durch die gewünschte Ertragssteigerung reduzieren würden.

Der Ertrag von der Baumwollpflanzen wird im Wesentlichen bestimmt durch:
- Position der Baumwollkapseln-tragenden Zweige (syn. generative Zweige; generative Triebe; engl.: fruiting branches, fruiting shoots) pro Pflanze;
- Anzahl der Baumwollkapseln-tragenden Zweige pro Pflanze;
- Anzahl der Knospen (syn. engl.: squares) pro Pflanze;
- Anzahl der aus den Knospen entwickelten Blüten (syn. engl.: flowers) pro Pflanze;
- Anzahl der aus den Blüten entwickelten, noch geschlossenen Baumwollkapseln (syn. engl.: closed bolls) pro Pflanze.

Hohe Erträge erhält man, wenn die Baumwollkapseln-tragenden Zweige sich zahlreich im unteren Bereich des Baumwollpflanzen-Stängels bilden. Die Bildung zahlreicher Knospen pro Zweig bzw. insgesamt pro Pflanze ist die Grundlage für die Blütenbildung in ausreichender Anzahl, aus denen dann wiederum Baumwollkapseln entstehen können. Die Öffnung der geschlossenen Baumwollkapseln bestimmt dann den Erntezeitpunkt und ist der Ertrag.

Die Verbindungen Flufenacet, Diflufenican und Flurtamone sind als herbizide Wirkstoffe bekannt. Als Einzelwirkstoff ist Flufenacet beispielweise unter den Handelsnamen Cadou®, Drago®, Define® und Tiara® im Handel. Neben der Verwendung des Einzelwirkstoffs sind auch Mischungen von Flufenacet mit anderen Herbiziden literaturbekannt (z.B. US 5985797 B, US 5593942 B, US 5912206 B, US 5811373 B, US 5858920 B; US 6967188 B, US 6492301 B, US 6864217 B, US 6486096 B; US 2003/0069138 A, WO 2002/058472 A, US 6365550 B, US 2003/0060367 A, US 6878675 B, US 6071858 B, WO 2007/112834 A) und im Handel, wie z.B. die Mischung mit Diflufenican (z.B. Herold®, Liberator®), oder mit Diflufenican und Flurtamone (z.B. Baccara FORTE®, Liberator FORTE®, Movon®, Vigon®).

Die oben genannten Flufenacet-Mischungen mit Diflufenican und gegebenenfalls zusätzlich mit Flurtamone werden fast ausschließlich im Getreideanbau im

Vorauflaufverfahren (Einarbeitung in den Boden vor Auflauf der Kulturpflanzen) eingesetzt. Eine Verwendung dieser Mischung im Baumwollanbau ist dagegen nicht bekannt.

Die Aufgabe der vorliegenden Erfindung bestand in der Bereitstellung von einfach und kostengünstig anzuwendenden Maßnahmen, die eine Verbesserung des Pflanzenwachstums und/oder eine Erhöhung des Pflanzenertrags im Baumwollanbau bewirken.

Es wurde nun überraschend gefunden, dass nach Applikation von Mischungen, welche die Wirkstoffe Flufenacet und Diflufenican enthalten, pflanzenwachstumsregulatorische Wirkungen auf Baumwollpflanzen festgestellt werden konnten. Dies gilt auch für die Applikation der oben genannten Mischungen, die zusätzlich den weiteren Wirkstoff Flurtamone enthielten.

Gegenstand der Erfindung ist daher die Verwendung einer Mischung, enthaltend
(A) Flufenacet und
(B) Diflufenican,
zur Verbesserung des Pflanzenwachstums und/oder Erhöhung des Pflanzenertrags im Baumwollanbau.

Die Aufwandmengen der Komponenten stehen in den erfindungsgemäß verwendeten Mischungen im nachstehend angegebenen Gewichtsverhältnis zueinander:
(Bereich Komponente A): (Bereich Komponente B)
im allgemeinen (1 - 2000): (1 - 500),
vorzugsweise (1 - 40) : (1 - 30),
besonders bevorzugt (1 - 10) : (1 - 10).

Die Aufwandmengen der jeweiligen der Komponenten in den erfindungsgemäß verwendeten Mischungen sind:
- Komponente A: im allgemeinen 10 - 2000 g AS/ha, vorzugsweise 30 - 400 g AS/ha, besonders bevorzugt 50 - 300 g AS/ha Flufenacet;
- Komponente B: im allgemeinen 1 - 500 g AS/ha, vorzugsweise 10 - 300 g AS/ha, besonders bevorzugt 30 - 200 g AS/ha Diflufenican.

Die oben genannte Mischung kann als zusätzliche Komponente (C) auch Flurtamone enthaltend.

Die Aufwandmengen der Komponenten stehen in den erfindungsgemäß verwendeten Mischungen dann im nachstehend angegebenen Gewichtsverhältnis zueinander:
(Bereich Komponente A): (Bereich Komponente B) : (Bereich Komponente C)
im allgemeinen (1 - 2000): (1 - 500) : (1 - 1000),
vorzugsweise (1 - 40) : (1 - 30) : (1 - 25),
besonders bevorzugt (1 - 10) : (1 - 10) : (1 - 10).

Die Aufwandmengen der jeweiligen der Komponenten in den erfindungsgemäß verwendeten Mischungen sind dann:
- Komponente A: im allgemeinen 10 - 2000 g AS/ha, vorzugsweise 30 - 400 g AS/ha, besonders bevorzugt 50 - 300 g AS/ha Flufenacet;
- Komponente B: im allgemeinen 1 - 500 g AS/ha, vorzugsweise 10 - 300 g AS/ha, besonders bevorzugt 30 - 200 g AS/ha Diflufenican;
- Komponente C: im allgemeinen 1 - 500 g AS/ha, vorzugsweise 1,5 - 300 g AS/ha, besonders bevorzugt 2 - 200 g AS/ha Flurtamone.

Entsprechend können aus den oben genannten Aufwandmengen die Gewichtsprozente (Gew.-%) der Komponenten bezogen auf das Gesamtgewicht der erfindungsgemäß verwendeten Mischungen berechnet werden, die zusätzlich auch noch weitere Bestandteile enthalten können.

Die in dieser Beschreibung mit ihrem "common name" genannten Wirkstoffe (wirksamen Bestandteile) sind beispielsweise aus "The Pesticide Manual", 15. Auflage 2009, oder in dem entsprechenden "The e-Pesticide Manual (15th edn) Version 5.1", jeweils herausgegeben vom British Crop Protection Council and the Royal Soc. of Chemistry, und aus "The Compendium of Pesticide Common Names" im Internet (Webseite: http://www.alanwood.net/pesticides/) bekannt.

Die für die erfindungsgemäße Verwendung wirksamen Bestandteile Komponente A, B und gegebenenfalls C werden im Folgenden summarisch als "(Einzel-)Wirkstoffe" (syn.: Aktivsubstanz, AS oder "active ingredient", a.i.), "(Einzel-)Komponente" oder als " Komponenten" bezeichnet und sind als Einzelstoffe oder als Mischung z.B. bekannt aus "The e-Pesticide Manual (15th edn), Ver. 5.1" (s.o.) und haben dort folgende Eintragungsnummern (Abkürzung: "PM #.." mit der jeweilig laufenden Eintragsnummer/"sequentiell entry number"):
- Komponente A: Flufenacet (PM #392), syn. thiafluamide, z.B. N-(4-fluorophenyl)-N-(1-methylethyl)-2-[[5-(trifluoromethyl)-1,3,4-thiadiazol-2-yl]oxy]acetamide;
- Komponente B: Diflufenican (PM #271), z.B. N-(2,4-difluorophenyl)-2-[3-(trifluoromethyl)phenoxy]-3-pyridinecarboxamide;
- Komponente D: Flurtamone (PM #416), z.B. (±)-5-(methylamino)-2-phenyl-4-[3-(trifluoromethyl)phenyl]-3(2H)-furanone.

Die oben genannten Wirkstoffe Flufenacet, Diflufenican und Flurtamone sind kommerziell erhältlich von der Firma Bayer Crop Science.

Wenn im Rahmen dieser Beschreibung die Kurzform des "common name" eines Wirkstoffs verwendet wird, so sind damit - soweit anwendbar - jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfassten Verbindungen, häufig eine bevorzugte Verbindung.

Soweit in dieser Beschreibung die Abkürzung "AS/ha" (syn.: a.i./ha) verwendet wird, bedeutet dies "Aktivsubstanz pro Hektar", bezogen auf 100%igen Wirkstoff. Alle Prozentangaben in der Beschreibung sind Gewichtsprozente (Abkürzung: "Gew.-%") und beziehen sich, wenn nicht anders definiert, auf das relative Gewicht der jeweiligen Komponente bezogen auf das Gesamtgewicht der verwendeten Mischungen (z.B. als Formulierung).

Die Komponenten A, B und gegebenenfalls C oder deren Unterkombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), wasserlösliche Konzentrate, emulgierbare Konzentrate (EC), wässrige Lösungen (SL), Emulsionen (EW) wie Öl-in-Wasser- und Wasser-in-Öl-Emulsionen, versprühbare Lösungen oder Emulsionen, Suspensionskonzentrate (SC), Dispersionen, Öldispersionen (OD), Suspoemulsionen (SE), Stäubemittel (DP), Beizmittel, Granulate zur Boden- oder Streuapplikation (GR) oder wasserdispergierbare Granulate (WG), Ultra-Low-Volume-Formulierungen, Mikrokapsel- oder Wachsdispersionen.

Die einzelnen Formulierungstypen sind im Prinzip bekannt und werden beispielsweise beschrieben in: "Manual on Development and Use of FAO and WHO Specifications for Pesticides", FAO and WHO, Rome, Italy, 2002; Winnacker-Küchler, "Chemische Technologie", Band 7, C. Hanser Verlag München, 4. Aufl. 1986; van Valkenburg, "Pesticide Formulations", Marcel Dekker N.Y. 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hanser Verlag München, 4. Aufl. 1986. Gegenstand der Erfindung ist daher auch die Verwendung der oben genannten erfindungsgemäß verwendeten Mischungen, enthaltend als zusätzliche Komponenten im Pflanzenschutz übliche Zusatzstoffe und/oder Formulierungshilfsmittel.

Daneben gelten nachfolgend spezifisch genannte Inertmaterialien, Tenside, Lösungsmittel, Verdicker und weitere Zusatzstoffe als spezifisch hierfür offenbart und bevorzugt, unabhängig vom Formulierungstyp.

Spritzpulver (benetzbare Pulver) sind in Wasser gleichmäßig dispergierbare Präparate, die neben den Wirkstoffen außer einem oder mehreren Verdünnungs- oder Inertstoffen noch Tenside ionischer und/oder nichtionischer Art (Netzmittel, Dispergiermittel), z.B. polyoxethylierte Alkylphenole, polyethoxylierte Fettalkohole oder -Fettamine, Propylenoxid-Ethylenoxid-Copolymerisate, Alkansulfonate oder Alkylbenzolsulfonate oder Alkylnaphthalinsulfonaten, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen der Wirkstoffe in einem organischen Lösungsmittel oder Lösungsmittelgemisch, z.B. Butanol, Cyclohexanon, Dimethylformamid, Acetophenon, Xylol oder auch höhersiedenden Aromaten oder Kohlenwasserstoffe unter Zusatz von einem oder mehreren ionischen und/oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Copolymerisate, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate sind Wasser-basierte Suspensionen von Wirkstoffen. Sie können beispielsweise durch Nass-Vermahlung mittels handelsüblicher Perlmühlen und gegebenenfalls Zusatz von weiteren Tensiden, wie sie z.B. oben bei den anderen Formulierungstypen bereits aufgeführt sind, hergestellt werden. Neben dem suspendierten Wirkstoff bzw. Wirkstoffen, können weitere Wirkstoffe in der Formulierung auch gelöst vorliegen. In ähnlicher Weise werden auch Dispersionen auf Wasserbasis (wässrige Dispersionen), hergestellt, die beispielsweise anionische Tenside aus der Gruppe der Naphthalinsulfonate oder aus der Gruppe der Kondensationsprodukte von Naphthalinsulfonaten mit Formaldehyd; nichtionische Tenside aus der Gruppe der Di- und Tri-block-copolymere aus Alkylenoxiden; und mehrbasige organische Säuren sowie Verdicker enthalten können.

Öldispersionen sind Öl-basierte Suspensionen von Wirkstoffen, wobei unter Öl jegliche organische Flüssigkeit zu verstehen ist, z. B. Pflanzenöle, aromatische oder aliphatische Lösemittel, oder Fettsäurealkylester. Sie können beispielsweise durch Nass-Vermahlung mittels handelsüblicher Perlmühlen und gegebenenfalls Zusatz von weiteren Tensiden (Netzmittel, Dispergiermittel), wie sie z.B. oben bei den anderen Formulierungstypen bereits aufgeführt sind, hergestellt werden. Neben dem suspendierten Wirkstoff bzw. Wirkstoffen, können weitere Wirkstoffe in der Formulierung auch gelöst vorliegen.

Emulsionen, z.B. Öl-in-Wasser-Emulsionen (EW), lassen sich beispielsweise mittels Rührern, Kolloidmühlen und/oder statischen Mischern aus Mischungen aus Wasser und mit Wasser nicht mischbaren organischen Lösungsmitteln und gegebenenfalls von weiteren Tensiden, wie sie z.B. oben bei den anderen Formulierungstypen bereits aufgeführt sind, herstellen. Die Wirkstoffe liegen hierbei in gelöster Form vor.

Granulate können entweder durch Verdüsen des Wirkstoffs auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite, Kreide oder von granuliertem Inertmaterial. Auch können geeignete Wirkstoffe in der für die Herstellung von Düngemittelgranulaten üblichen Weisegewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt. Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gewichtsprozent, insbesondere 2 bis 95 Gew.-%, Wirkstoffe der Komponenten, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstoffformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Den oben genannten Wirkstoffformulierungen können gegebenenfalls auch, noch geeignete Verdickungsmittel zugesetzt werden, wie beispielsweise:
1) modifizierte natürliche Silikate, wie chemisch modifizierte Bentonite, Hectorite, Attapulgite, Montmorillonite, Smektite oder andere Silikatmineralien; 2) Verdicker auf Basis synthetischer Polymere; 3) synthetische Silikate.

Die Wirkung der erfindungsgemäß verwendeten Komponenten kann z.B. durch oberflächenaktive Substanzen verbessert werden, beispielsweise durch Netzmittel aus der Reihe der Fettalkohol-Polyglykolether. Die Fettalkohol-Polyglykolether enthalten vorzugsweise 10 - 18 C-Atome im Fettalkoholrest und 2 - 20 Ethylenoxideinheiten im Polyglykoletherteil. Die Fettalkohol-Polyglykolether können nichtionisch vorliegen, oder ionisch, z.B. in Form von Fettalkohol-Polyglykolethersulfaten oder -phosphaten, vorliegen, die z.B. als Alkalisalze (z.B. Natrium- und Kaliumsalze) oder Ammoniumsalze, oder auch als Erdalkalisalze wie Magnesiumsalze verwendet werden, wie C₁₂/C₁₄-Fettalkohol-diglykolethersulfat-Natrium (Genapol^{®} LRO, Clariant GmbH); siehe z.B. EP 0476555 A, EP 0048436 A, EP 0336151 A oder US 4400196 B sowie Proc. EWRS Symp. "Factors Affecting Herbicidal Activity and Selectivity", 227 - 232 (1988). Nichtionische Fettalkohol-Polyglykolether sind beispielsweise 2 - 20, vorzugsweise 3 - 15, Ethylenoxideinheiten enthaltende (C₁₀- C₁₈)-, vorzugsweise (C₁₀-C₁₄)-Fettalkohol-Polyglykolether (z.B. Isotridecylalkohol-Polyglykolether) z.B. aus der Genapol^{®} X-Reihe wie Genapol^{®} X-030, Genapol^{®} X-060, Genapol^{®} X-080 oder Genapol^{®} X-150 (alle von Clariant GmbH).

Die vorliegende Erfindung umfasst ferner die Kombination der Komponenten A, B und gegebenenfalls C mit den vorgängig genannten Netzmitteln aus der Reihe der Fettalkohol-Polyglykolether, die vorzugsweise 10 - 18 C-Atome im Fettalkoholrest und 2 - 20 Ethylenoxideinheiten im Polyglykoletherteil enthalten und nichtionisch oder ionisch (z.B. als Fettalkohol-polyglykolethersulfate) vorliegen können. Bevorzugt sind C₁₂/C₁₄-Fettalkohol-diglykolethersulfat-Natrium (Genapol^{®} LRO, Clariant GmbH) und Isotridecylalkohol-Polyglykolether, mit 3 - 15 Ethylenoxideneinheiten, z.B. aus der Genapol^{®} X-Reihe wie Genapol^{®} X-030, Genapol^{®} X-060, Genapol^{®} X-080 und Genapol^{®} X-150 (alle von Clariant GmbH). Weiterhin ist bekannt, daß Fettalkohol-Polyglykolether wie nichtionische oder ionische Fettalkohol-polyglykolether (z.B. Fettalkohol-Polyglykolethersulfate) auch als Penetrationshilfsmittel und Wirkungsverstärker für eine Reihe anderer Herbizide, unter anderem auch für Herbizide aus der Reihe der Imidazolinone geeignet sind (siehe z.B. EP 0502014 A). Die Wirkung der erfindungsgemäß verwendeten Komponenten kann auch durch die Verwendung von Pflanzenölen verstärkt werden. Unter dem Begriff Pflanzenöle werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für C₁₀-C₂₂-Fettsäure-Ester sind Ester, die durch Umsetzung von Glycerin oder Glykol mit den C₁₀-C₂₂-Fettsäuren erhalten werden, wie sie z.B. in Ölen aus ölliefernden Pflanzenarten enthalten sind, oder C₁-C₂₀-Alkyl-C₁₀C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Die Pflanzenöle können in den erfindungsgemäß verwendeten Mischungen z.B. in Form kommerziell erhältlicher ölhaltiger Formulierungszusatzstoffe, insbesondere solcher auf Basis von Rapsöl wie Hasten^{®} (Victorian Chemical Company, Australien, nachfolgend Hasten genannt, Hauptbestandteil: Rapsölethylester), Actirob^{®}B (Novance, Frankreich, nachfolgend ActirobB genannt, Hauptbestandteil: Rapsölmethylester), Rako-Binol^{®} (Bayer AG, Deutschland, nachfolgend Rako-Binol genannt, Hauptbestandteil: Rapsöl), Renol^{®} (Stefes, Deutschland, nachfolgend Renol genannt, Pflanzenölbestandteil: Rapsölmethylester) oder Stefes Mero^{®} (Stefes, Deutschland, nachfolgend Mero genannt, Hauptbestandteil: Rapsölmethylester) enthalten sein.

Eine gemeinsame Formulierung der erfindungsgemäß verwendeten Komponenten A, B und gegebenenfalls C hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden.

Bevorzugt als gemeinsame Formulierungsformen sind Suspensionskonzentrate (SC) und Dispersionen auf Wasserbasis. In einer bevorzugten Ausführungsform enthalten diese:
a) 0,1 bis 50% Flufenacet, 0,1 bis 50% Diflufenican und gegebenenfalls 0,1 bis 50% Flurtamone,
b) 0,1 bis 10% eines oder mehrerer anionischer Tenside,
c) 0,1 bis 20% eines oder mehrerer nichtionischer Tenside,
d) 0,05 bis 10% einer oder mehrerer mehrbasiger organischer Säuren,
e) 0 bis 5% eines oder mehrerer Verdicker,
f) 0 bis 50% eines oder mehrerer von Komponente a) verschiedener agrochemischer Wirkstoffe,
g) 0 bis 20% eines oder mehrerer weiterer üblicher Hilfs- und Zusatzstoffe, und
h) 20 bis 70% Wasser.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser, und anschließend auf die Anbaufläche und/oder die Pflanzen appliziert. Dies schließt auch spezielle Applikationsvarianten ein, wie sie im Baumwollanbau üblich sind, z.B. die Applikation per Flugzeug. Staubförmige Zubereitungen, Boden- bzw. Streugranulate sowie versprühbare Lösungen werden vor der Anwendung üblicherweise nicht mehr mit weiteren inerten Stoffen verdünnt.

Auf der Basis dieser Formulierungen lassen sich auch Kombinationen mit anderen agrochemischen Wirkstoffen, wie Fungizide, Akarizide, Insektizide, sowie Safener, Düngemittel und/oder Wachstumsregulatoren herstellen, z.B. in Form einer Misch- bzw. Fertig-Formulierung (Co-Formulierung) oder als Tankmix.

Die erfindungsgemäß verwendete Mischung bzw. Kombination der Wirkstoffe kann in an sich üblicher Weise eingesetzt werden, beispielsweise durch Sprühapplikation einer aus Einzelformulierungen der Wirkstoffe im Tank-Mix hergestellten Spritzbrühe oder einer durch Verdünnen mit Wasser aus einer Misch- bzw. Fertig-Formulierung (Co-Formulierung) der Wirkstoffe hergestellten Spritzbrühe. Für die Applikation kommen vor allem solche Methoden in Frage, die für die Anwendung der Einzelwirkstoffe üblich sind und eine gemeinsame Applikation ermöglichen. Bevorzugt ist die Applikation einer Spritzbrühe, die durch Verdünnen mit Wasser aus einer Mischformulierung (Co-Formulierung) der Wirkstoffe hergestellt wird.

Die Anwendung kann prinzipiell auch durch aufeinander folgende Applikationen der Einzelwirkstoffe (Komponenten) erfolgen, wobei der mögliche Zeitabstand in einfachen, routinemäßigen Vorversuchen ermittelt werden kann. Bevorzugt ist jedoch die gemeinsame Applikation. Die Wirkstoffe können gegebenenfalls auch in Kombination mit weiteren Pflanzenschutzmittel-Wirkstoffen eingesetzt werden.

Die Wirkstoffe können auf die Pflanzen, Pflanzenteile, Pflanzensamen oder die Anbaufläche (Ackerboden) ausgebracht werden, vorzugsweise auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Weiterer Gegenstand der vorliegenden Erfindung ist daher auch die Behandlung von Baumwollpflanzen, umfassend die Applikation einer zur Verbesserung des Pflanzenwachstums und/oder Erhöhung des Pflanzenertrags wirksamen Menge der erfindungsgemäß verwendeten Mischungen.

Baumwollpflanzen, die erfindungsgemäß behandelt werden können, sind gekennzeichnet durch erhöhte Ertragseigenschaften. Ein erhöhter Ertrag kann bei diesen Pflanzen z.B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und beschleunigter Abreife beruhen. Der Ertrag kann weiterhin durch eine verbesserte Pflanzenarchitektur (unter Streß- und nicht-Streß-Bedingungen) beeinflusst werden, darunter frühe Blüte, Kontrolle der Blüte, Pflanzengröße, Internodienzahl und -abstand, Wurzelwachstum, Anzahl der Fruchtansätze, sowie Standfestigkeit.

Von besonderes Bedeutung für die Ertragsbildung sind:
- Anzahl der Baumwollkapseln-tragenden Zweige (syn. generative Zweige; generative Triebe; engl.: fruiting branches, fruiting shoots) pro Pflanze;
- Anzahl der Knospen (syn. engl.: squares) pro Pflanze;
- Anzahl der aus den Knospen entwickelten Blüten (syn. engl.: flowers) pro Pflanze;
- Anzahl der aus den Blüten entwickelten, noch geschlossenen Baumwollkapseln (syn. engl.: closed bolls) pro Pflanze.

Ebenso Gegenstand der vorliegenden Erfindung ist ein Verfahren zur Verbesserung des Pflanzenwachstums und/oder Erhöhung des Pflanzenertrags bei Baumwollpflanzen, dadurch gekennzeichnet, dass die Applikation einer wirksamen Menge der erfindungsgemäß verwendeten Mischungen auf die Fläche, wo die Verbesserung des Pflanzenwachstums und/oder Erhöhung des Pflanzenertrags gewünscht wird, erfolgt.

Selbstredend können die erfindungsgemäß verwendeten Mischungen auch zur Behandlung gentechnisch veränderter (transgener) Baumwollpflanzen, eingesetzt werden, wobei diese Pflanzen beispielsweise ein oder mehrere Fremdgene zur Erzielung von Insektizid- und/oder Herbizid- Resistenzen bzw. Toleranzen, aber auch zur Verbesserung von Qualitätseigenschaften enthalten.

Herbizidtolerante Pflanzen können entweder durch genetische Transformation oder durch Selektion von Pflanzen, die eine Herbizidtoleranz-Mutation enthalten, erhalten werden, wie z.B. Glyphosatetolerante Pflanzen, beispielsweise erhältlich durch Transformation der Pflanze mit einem Gen, das für das Enzym 5-Enolpyruvylshikimat-3-phosphatsynthase (EPSPS) kodiert ist, oder durch mutierte EPSPS, oder durch Exprimierung eines Gens für das Glyphosate-Oxidoreduktase-Enzym, oder durch Exprimierung eines Gens für das Glyphosate-acetyltransferase-Enzym, oder durch Selektion natürlich vorkommender Mutationen der oben erwähnten Gene. Herbizidresistente Pflanzen sind beispielsweise Pflanzen, die gegenüber Herbiziden, die beispielsweise die Glutaminsynthase , Hydroxyphenylpyruvatdioxygenase (HPPD), Acetylcoenzym-A-Carboxylase Inhibitoren (ACCase) oder Acetolactatsynthase (ALS) hemmen, tolerant gemacht worden sind. Insektenresistente Pflanzensind beispielsweise Pflanzen, die mindestens ein Transgen enthalten, das eine Kodiersequenz umfasst, die beispielweise für Folgendes kodiert: insektizide Kristallproteine und/oder sezernierte Proteine und/oder insektizide Hybridproteine aus Bacillus spec. und/oder insektizide Teile davon, allein oder in Kombination.

Verbesserte Qualitätseigenschaften finden sich beispielsweise bei Baumwollpflanzen mit veränderten Fasereigenschaften, die durch genetische Transformation oder durch Selektion von Pflanzen, die eine Mutation enthalten, erhalten werden. Dazu zählen beispielsweise: Baumwollpflanzen, die eine veränderte Form von Cellulosesynthasegenen enthalten, wie dies in WO 1998/000549 beschrieben ist; Baumwollpflanzen, die eine veränderte Form von rsw2- oder rsw3-homologen Nukleinsäuren enthalten, wie dies in WO 2004/053219 beschrieben ist; Baumwollpflanzen mit einer erhöhten Expression der Saccharosephosphatsynthase, wie dies in WO 2001/017333 beschrieben ist; Baumwollpflanzen mit einer erhöhten Expression der Saccharosesynthase, wie dies in WO 2002/45485 beschrieben ist; Baumwollpflanzen bei denen der Zeitpunkt der Durchlaßsteuerung der Plasmodesmen an der Basis der Faserzelle verändert ist, z.B. durch Herunterregulieren der faserselektiven β-1,3-Glucanase, wie dies in WO 2005/017157 beschrieben ist; Baumwollpflanzen mit Fasern mit veränderter Reaktivität, z.B. durch Expression des N-Acetylglucosamintransferasegens, darunter auch nodC, und von Chitinsynthasegenen, wie dies in WO 2006/136351 beschrieben ist.

Besonders nützliche transgene Baumwollpflanzen, die erfindungsgemäß behandelt werden können, sind Pflanzen mit einem oder mehreren Genen, die für ein oder mehrere Toxine kodieren, sind die transgenen Pflanzen, die u.a. unter den folgenden Handelsbezeichnungen angeboten werden: YIELD GARD®, Bollgard®, Nucotn®, Nucotn 33B®; sowie herbizidtolerante Baumwollpflanzenwerden, die u.a. unter der folgenden Handelsbezeichnungen angeboten: Roundup Ready®.

Die Erfindung wird durch die Beispiele näher erläutert, ohne sie dadurch einzuschränken.

### Beispiele

In Feldversuchen wurden unter natürlichen Bedingungen bei praxisüblicher Feldvorbereitung die erfindungsgemäßen Mittel mittels Knapsack-Sprayer mit dem angegebenen Spritzvolumen appliziert und im angegebenen Zeitraum nach Applikation im Vergleich zu unbehandelten Teilstücken (Parzellen) alle ertragsbestimmenden Elemente der Baumwollpflanzen erfasst.

### 1. Feldversuch (Mischung Flufenacet und Diflufenican)

### 1.1 Tabelle: Versuchsdaten

| | |
|---|---|
| Versuchsort: | Yamoussoukro, Elfenbeinküste, Afrika |
| Baumwollsorte: | Kurzfaserige Baumwolle (*Gossypium hirsutum*) mit der Bezeichnung "American Upland" |
| Parzellengröße: | jeweils 48 m² |
| Anzahl Parzellen pro Behandlungsstufe: | jeweils 3 Parzellen |
| Applikations-Termin: | 17.07.2013 |
| Appl ikations-Volumen: | 250-300 L/ha |
| Auswertung: | 71 Tage nach Applikation (Days after Application; DAA) |
| Anzahl Pflanzen für Auswertung: | Auswertung von jeweils 100 Pflanzen pro Parzelle; Tabellendaten sind Mittelwerte von 300 Pflanzen. |

### 1.2 Tabelle: Versuchsergebnisse

| Behandlungsstufe: Handelsname/ Formulierung/ Aufwandmenge pro ha | Dosis [g a.i./ha] | Anzahl generative Zweige (fruiting shoots) | Anzahl Knospen (squares) | Anzahl Blüten (flowers) | Anzahl Baumwollkapseln (balls closed) |
|---|---|---|---|---|---|
| Unbehandelt | - | 1,99 | 1,31 | 0,20 | 0,57 |
| Liberator 500® SC 0,4 L/ha | Flufenacet 160g Diflufenican 40g | 4,18 | 2,05 | 0,97 | 1,78 |
| Liberator 500® SC 0,5 L/ha | Flufenacet 200g Diflufenican 50g | 4,98 | 2,82 | 1,07 | 1,79 |
| Liberator 500® SC 0,75 L/ha | Flufenacet 300g Diflufenican 75g | 5,51 | 3,01 | 1,43 | 2,03 |

### 1.3 Versuchskommentar:

Die erfindungsgemäße Mischung, enthaltend (A) Flufenacet und (B) Diflufenican (Liberator 500® SC), fördert deutlich das Wachstum der Baumwollpflanzen. Die Anzahl aller Ertragskomponenten der Baumwollpflanzen, wie generative Zweige, Knospen, Blüten sowie Kapseln, ist erheblich erhöht im Vergleich zur unbehandelten Kontrolle. Dieser Versuch verdeutlicht den überraschenden,
pflanzenwachstumsregulatorischen Effekt der erfindungsgemäßen Mischung auf die Ertragsbildung bei Baumwollpflanzen.

### 2. Feldversuch (Mischung Flufenacet, Diflufenican und Flurtamone)

### 2.1 Tabelle: Versuchsdaten

| Versuchsort: | Adana, Türkei |
|---|---|
| Baumwollsorte: | Baumwolle (*Gossypium hirsutum*) der Sorte "Claudia (Bayer)" |
| Parzellengröße: | jeweils 6 Pflanzenreihen mit 15 m Länge |
| Anzahl Parzellen pro Behandlungsstufe: | jeweils 2 Parzellen |
| Applikations-Termin: | 23.03.2013 |
| Appl ikations-Volumen: | 300 L/ha |
| Auswertung: | Tage nach Applikation wie in Tabelle 2.2 angegeben (Days after Application; DAA) |
| Anzahl Pflanzen für Auswertung: | Auswertung von jeweils 100 Pflanzen pro Parzelle; Tabellendaten sind Mittelwerte von 200 Pflanzen. |

### 2.2 Tabelle: Versuchsergebnisse

| Behandlungsstufe: Handelsname/ Aufwandmenge pro ha | Dosis [g a.i./ha] | Tage nach Applikation (DAA) | Anzahl generative Zweige (fruiting shoots) | Anzahl Knospen (squares) | Anzahl Blüten (flowers) | Anzahl Baumwollkapseln (balls closed) |
|---|---|---|---|---|---|---|
| Unbehandelt | - | 105 | 10,60 | 6,55 | 2,15 | 6,05 |
| | | 126 | 14,15 | 2,90 | 1,00 | 11,50 |
| Movon® 0,5 L/ha | Flufenacet 120g Diflufenican 45g Flurtamone 60g | 105 | 12,50 | 14,25 | 2,00 | 6,60 |
| | | 126 | 18,25 | 5,30 | 1,70 | 16,70 |
| Movon® 0,75 L/ha | Flufenacet 180g Diflufenican 67,5g Flurtamone 90g | 105 | 11,55 | 11,75 | 3,15 | 6,15 |
| | | 126 | 15,50 | 3,80 | 1,45 | 16,35 |
| Movon® 1,0 L/ha | Flufenacet 240g Diflufenican 90g Flurtamone 120g | 105 | 11,20 | 11,95 | 1,90 | 5,05 |
| | | 126 | 14,15 | 4,05 | 1,30 | 15,35 |
| Liberator Forte® 1,0 L/ha | Flufenacet 120g Diflufenican 120g Flurtamone 120g | 105 | 10,70 | 3,50 | 2,15 | 6,35 |
| | | 126 | 14,30 | 0 | 0 | 12,30 |
| Liberator Forte® 1,25 L/ha | Flufenacet 150g Diflufenican 150g Flurtamone 150g | 105 | 11,60 | 11,95 | 3,05 | 6,10 |
| | | 126 | 16,90 | 2,65 | 0,70 | 12,55 |
| Liberator Forte® 1,5 L/ha | Flufenacet 180g Diflufenican 180g Flurtamone 180g | 105 | 12,15 | 13,40 | 1,95 | 5,75 |
| | | 126 | 19,40 | 0,95 | 1,55 | 11,65 |

### 2.3 Versuchskommentar:

Die erfindungsgemäße Mischung, enthaltend (A) Flufenacet und (B) Diflufenican mit der zusätzlichen Komponente (C) Flurtamone (Movon®, Liberator Forte®), fördert ebenfalls deutlich das Wachstum der Baumwollpflanzen. Die Anzahl aller Ertragskomponenten der Baumwollpflanzen, wie generative Zweige, Knospen, Blüten sowie Kapseln, ist wiederum deutlich erhöht im Vergleich zur unbehandelten Kontrolle. Auch dieser Versuch an einem anderen Standort verdeutlicht wieder den überraschenden, pflanzenwachstumsregulatorischen Effekt der erweiterten erfindungsgemäßen Mischung auf die Ertragsbildung bei Baumwollpflanzen.

## Patentansprüche

1. Verwendung einer Mischung, enthaltend
(A) Flufenacet und
(B) Diflufenican,
zur Verbesserung des Pflanzenwachstums und/oder Erhöhung des Pflanzenertrags im Baumwollanbau.

2. Verwendung einer Mischung gemäß Anspruch 1, worin die Komponenten im nachstehend angegebenen Gewichtsverhältnis zueinander stehen:
(Bereich Komponente A): (Bereich Komponente B)
im allgemeinen (1 - 2000): (1 - 500),
vorzugsweise (1 - 40) : (1 - 30),
besonders bevorzugt (1 - 10) : (1 - 10).

3. Verwendung einer Mischung nach einem der Ansprüche 1 oder 2, enthaltend für die jeweiligen Herbizid-Komponenten nachstehend angegebenen Aufwandmengen:
Komponente A: im allgemeinen 10 - 2000 g AS/ha, vorzugsweise 30 - 400 g AS/ha, besonders bevorzugt 50 - 300 g AS/ha Flufenacet;
Komponente B: im allgemeinen 1 - 500 g AS/ha, vorzugsweise 10 - 300 g AS/ha, besonders bevorzugt 30 - 200 g AS/ha Diflufenican.

4. Verwendung einer Mischung nach einem der Ansprüche 1 bis 3, enthaltend als zusätzliche Komponente (C) Flurtamone.

5. Verwendung einer Mischung nach einem der Ansprüche 1 bis 4, worin die Komponenten im nachstehend angegebenen Gewichtsverhältnis zueinander stehen:
(Bereich Komponente A) : (Bereich Komponente B) : (Bereich Komponente C) im allgemeinen (1 - 2000) : (1 - 500) : (1 - 1000),
vorzugsweise (1 - 40) : (1 - 30) : (1 - 25),
besonders bevorzugt (1 - 10) : (1 - 10) : (1 - 10).

6. Verwendung einer Mischung nach einem der Ansprüche 1 bis 5, enthaltend für die jeweiligen Herbizid-Komponenten nachstehend angegebenen Aufwandmengen:
Komponente A: im allgemeinen 10 - 2000 g AS/ha, vorzugsweise 30 - 400 g AS/ha, besonders bevorzugt 50 - 300 g AS/ha Flufenacet;
Komponente B: im allgemeinen 1 - 500 g AS/ha, vorzugsweise 10 - 300 g AS/ha, besonders bevorzugt 30 - 200 g AS/ha Diflufenican;
Komponente C: im allgemeinen 1 - 500 g AS/ha, vorzugsweise 1,5 - 300 g AS/ha, besonders bevorzugt 2 - 200 g AS/ha Flurtamone.

7. Verwendung einer Mischung nach einem der Ansprüche 1 bis 6, enthaltend als zusätzliche Komponenten im Pflanzenschutz übliche Zusatzstoffe und/oder Formulierungshilfsmittel.

8. Behandlung von Baumwollpflanzen, umfassend die Applikation einer zur Verbesserung des Pflanzenwachstums und/oder Erhöhung des Pflanzenertrags wirksamen Menge der Komponenten gemäß einem der Ansprüche 1 bis 7.

9. Behandlung gemäß Anspruch 8 , **dadurch gekennzeichnet, dass** die Baumwollpflanzen transgene Baumwollpflanzen sind.

10. Verfahren zur Verbesserung des Pflanzenwachstums und/oder Erhöhung des Pflanzenertrags bei Baumwollpflanzen, **dadurch gekennzeichnet, dass** die Applikation einer wirksamen Menge der Komponenten gemäß einem der Ansprüche 1 bis 7 auf die Fläche, wo die Verbesserung des Pflanzenwachstums und/oder Erhöhung des Pflanzenertrags gewünscht wird, erfolgt.

11. Verfahren gemäß Anspruch 10, **dadurch gekennzeichnet, dass** die Baumwollpflanzen transgene Baumwollpflanzen sind.
